# FASCICULE DE BREVET EUROPEEN

(11) **EP 3 595 194 B1**
(45) Date de publication et mention de la délivrance du brevet: **10.11.2021**
(21) Numéro de dépôt: 19183007.4
(22) Date de dépôt: 27.06.2019
(51) Int. Cl.: H04B 7/185

(54) **SYSTÈME DE COMMUNICATION À TRÈS HAUT DÉBIT PAR SATELLITES COMPRENANT AU MOINS UN SATELLITE D'ALIMENTATION RÉALISANT DES TRAITEMENTS A BORD**
SATELLITENKOMMUNIKATIONSSYSTEM MIT SEHR HOHER BANDBREITE, DAS MINDESTENS EINEN VERSORGUNGSSATELLITEN UMFASST, DER VERARBEITUNGEN AN BORD DURCHFÜHRT
COMMUNICATION SYSTEM WITH VERY HIGH THROUGHPUT BY SATELLITE COMPRISING AT LEAST ONE SUPPLY SATELLITE CARRYING OUT ONBOARD PROCESSING

(30) Priorité: 12.07.2018 FR 1800738
(43) Date de publication de la demande: 15.01.2020
(73) Titulaire: Thales, 92400 Courbevoie (FR)
(72) Inventeur: GAYRARD, Jean-Didier, 31100 Toulouse (FR); VIERA, Arnaud, 31100 Toulouse (FR); ROGNANT, Pierre, 31100 Toulouse (FR); ZOCCARATO, Walter, 31100 Toulouse (FR)
(74) Mandataire: Marks & Clerk France

(56) Documents cités:
- EP-A1- 2 723 001
- EP-A1- 3 247 149
- WO-A1-2018/100180
- GB-A- 2 319 700

## Description

L'invention porte sur un système de communication à très haut débit par satellites, ou VHTS pour "Very High Throughput Satellite" en langue anglaise, muni d'au moins un satellite d'alimentation de données pour satellite utilisateur.

De tels systèmes de communication à très haut débit permettent à des terminaux d'utilisateur d'accéder à haut débit (typiquement à quelques Mbps) au réseau Internet via un satellite utilisateur, une station d'alimentation et un point de présence de fournisseur d'accès internet.

Une station désigne un équipement comprenant au moins un émetteur et/ou au moins un récepteur, ainsi que les appareils accessoires, nécessaires pour assurer un service de communication en un emplacement donné. Une station d'alimentation ("feeder station" en langue anglaise) désigne une station terrienne destinée à assurer les liaisons d'alimentation avec des satellites et à interfacer un réseau terrestre.

Le document EP2723001 A1 divulgue un système de communication à très haut débit par satellites. Dans les systèmes à très haut débit par satellites la liaison d'alimentation en données d'un satellite utilisateur est un goulot d'étranglement car toutes les données numériques destinées aux utilisateurs et issues des utilisateurs passent sur cette liaison d'alimentation reliant la station d'alimentation au satellite.

Il est connu des systèmes à très haut débit par satellites opérant en bande Ka (20/30 GHz) ayant une zone de couverture constituée de 150 spots et un bande passante de 1.4 GHz allouée à chaque spot, qui sont en mesure de transmettre aux utilisateurs en moyenne plus de 500 Gbits/seconde de données (efficacité spectrale moyenne de 2.4 b/s/Hz). Les données numériques sont échangées entre les terminaux d'utilisateur et le satellite utilisateur par modulation de signaux radiofréquences selon un standard d'accès, par exemple le standard DVB-S2/DVB-RCS2 de l'ETSI.

La liaison d'alimentation de données doit permettre de transmettre vers le satellite utilisateur une bande passante de 210 GHz (150 spots multipliés par 1.4 GHz), ce qui est une bande de fréquences considérable pour une liaison radiofréquence.

En effet, les bandes de fréquence allouées aux liaisons d'alimentation des satellites géostationnaires par l'Union Internationale des Télécommunications (ITU) n'excèdent pas 2 GHz en bande Ka (20/30 GHz) et 5 GHz en bande Q/V (40/50 GHz). Ainsi pour transmettre par exemple une bande de fréquence de 210 GHz de large en bande Q/V, il faudra réutiliser la fréquence 42 fois, soit par exemple en établissant 21 liaisons radio entre 21 stations d'alimentation et le satellite, chaque liaison radio fonctionnant en bande Q/V dans deux polarisations et ayant une bande passante de 5 GHz.

Les liaisons radiofréquences en bande Q/V à travers l'atmosphère sont sujettes à des phénomènes d'atténuation et de distorsion des signaux dus aux intempéries (pluie, neige, grêle...) et en conséquence ces liaisons radiofréquences sont régulièrement inopérantes. Il est nécessaire de mettre en œuvre la technique de diversité de sites, en installant des stations d'alimentation de secours et de les relier aux autres stations d'alimentation par un réseau terrestre, nommé réseau de diversité. Ainsi, par exemple un système comprenant 21 stations d'alimentation nécessite 6 stations d'alimentation de secours pour obtenir des disponibilités annuelles supérieures à 99.8%. Le réseau de diversité comprend ainsi 27 stations radio d'alimentation.

Chaque station d'alimentation est équipée avec des ensembles de modulation/démodulation comprenant des modems et leurs appareils accessoires aptes à traiter la partie du trafic de données transportée dans la bande passante de la liaison d'alimentation de ladite station, soit dans notre exemple en moyenne plus de 24 Gbits/seconde.

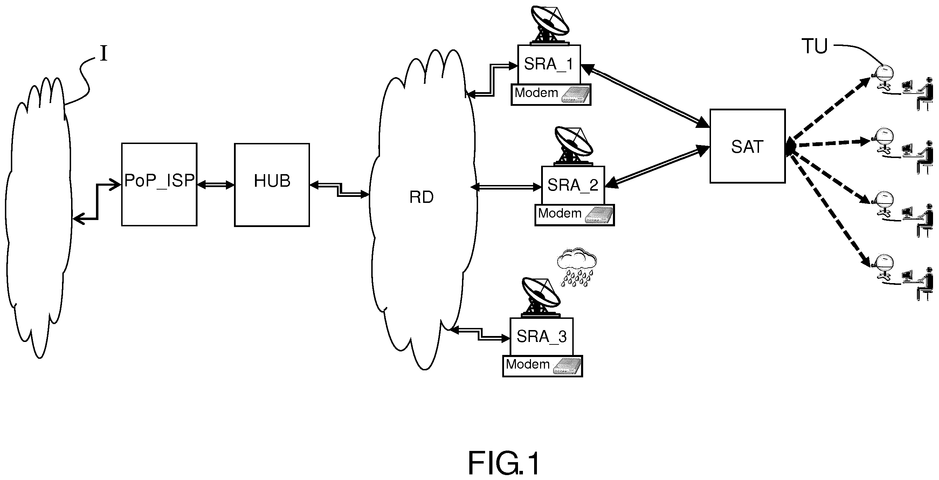

La figure 1 illustre schématiquement un système de communication par satellites à très haut débit comprenant un satellite mettant en œuvre le service aux utilisateurs alimenté par un réseau de stations radiofréquences d'alimentation de données, selon l'état de la technique. Le système comprend un satellite très haut débit SAT communiquant d'un côté avec des terminaux d'utilisateur TU par liaisons radio en bande Ka et d'un autre coté avec plusieurs stations terriennes radio d'alimentation SRA_i par liaison radio en bande Q/V. Les stations terriennes radio SRA_i sont reliées entre-elles et à un centre de contrôle HUB par un réseau terrestre de diversité RD. Le centre de contrôle HUB interface le réseau Internet (I) via un point de présence PoP d'un fournisseur d'accès Internet ou ISP pour acronyme de "Internet Service Provider" en langue anglaise. Chaque station radio d'alimentation SRA_i comprend un ensemble de modulateurs/démodulateurs modem configurés pour d'une part moduler sur un signal radio en bande Ka des données numériques destinées aux terminaux d'utilisateur TU et d'autre part démoduler les signaux radio en bande Ka pour restituer les données numériques issues des terminaux d'utilisateur.

Il est connu de transmettre des données vers un satellite par une liaison optique en espace libre ou liaison laser. Une telle liaison permet de transmettre des débits de données de plusieurs centaines de Gigabits/seconde.

Il est ainsi possible de transmettre plus de 500 Gbits/seconde avec une ou deux stations optiques d'alimentation. Toutefois, les liaisons optiques ou laser à travers l'atmosphère sont très sensibles à la présence de nuages et de nébulosité qui bloquent la transmission du signal optique laser.

En conséquence, ces liaisons laser sont régulièrement interrompues et offrent donc une très faible disponibilité dans des zones tempérées comme l'Europe. La technique de diversité de sites permet de pallier cet inconvénient et d'augmenter significativement la disponibilité du réseau. La technique de diversité nécessite de relier entre-elles les stations d'alimentation optiques par un réseau terrestre à fibre optique ou réseau de diversité. Ainsi, des études ont montré qu'un réseau de diversité comprenant de 12 à 15 stations de secours réparties en Europe permet d'obtenir des disponibilités annuelles équivalentes à celles d'un réseau de station radio d'alimentation, avec moins de stations d'alimentation.

Pour fonctionner, cette solution nécessite d'installer les ensembles de modulation/démodulation (modems et appareils accessoires) à bord des satellites, et de transmettre par les liaisons optiques d'alimentation les données numériques destinées aux terminaux d'utilisateur et issues des terminaux d'utilisateur.

Cette solution présente l'inconvénient de mobiliser des ressources d'un satellite en masse et en puissance pour emporter et faire fonctionner les ensemble de modulation/démodulation. Ces ressources en masse et puissance utilisées par les modems et appareils accessoires impliquent soit d'augmenter la taille et donc le coût des satellites, soit de réduire la capacité en bande passante des satellites et donc les revenus générés. Dans les deux choix de dimensionnement, le système a une rentabilité diminuée.

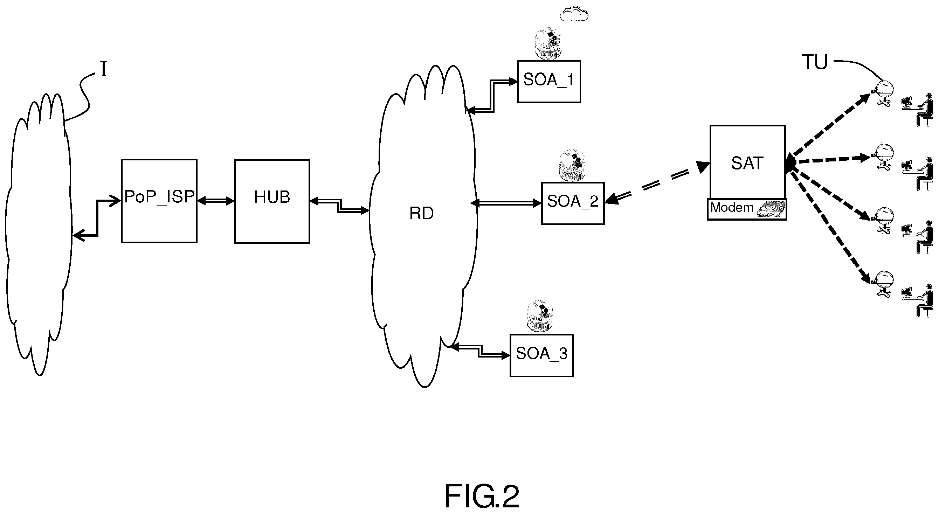

Ainsi, comme illustrée sur la figure 2, on peut installer les ensembles de modulation/démodulation Modem à bord des satellites et transmettre par la liaison d'alimentation les données numériques destinées aux terminaux d'utilisateur TU et issues des terminaux d'utilisateur TU. Un tel système utilise un réseau de diversité de stations optiques d'alimentation, en l'espèce trois stations SOA_1, SOA_2, SOA_3. La figure 2 illustre schématiquement un système de communication par satellites à très haut débit comprenant des satellites utilisateurs mettant en œuvre un service aux utilisateurs, munis de modems embarqués, et alimentés par un réseau de stations optiques d'alimentation de données selon l'état de la technique. Le système comprend un satellite très haut débit SAT communiquant d'un côté avec des terminaux d'utilisateur TU par liaisons radio en bande Ka et d'un autre coté avec une station terrienne optique d'alimentation SOA_2 par liaison optique en espace libre. Le satellite très haut débit SAT est équipé d'ensembles de modulateurs/démodulateurs Modem configurés pour d'une part transmettre par modulation d'un signal radio en bande Ka des données numériques destinées aux terminaux d'utilisateur TU et d'autre part démoduler les signaux radio en bande Ka pour restituer les données numériques issues des terminaux d'utilisateur TU. Les stations terriennes optiques SOA_i sont reliées entre-elles et à un centre de contrôle HUB par un réseau terrestre de diversité RD. Le centre de contrôle HUB interface le réseau Internet I via un point de présence PoP_ISP d'un fournisseur d'accès Internet.

De tels systèmes présentent l'avantage de réduire le nombre de modems à installer dans les stations optiques d'alimentation, mais ont notamment pour inconvénient de nécessiter d'installer des modems à bord des satellites ce qui mobilise des ressources en masse et en puissance des satellites utilisateurs (i.e. mettant en œuvre le service aux utilisateurs).

Les ressources de masse et de puissance utilisées par les modems impliquent soit d'augmenter la taille et donc le coût des satellites, soit de réduire la capacité en bande passante des satellites et donc les revenus générés. Dans les deux choix de dimensionnement, le système a une rentabilité limitée.

Un but de l'invention est de pallier les problèmes précédemment cités, et plus particulièrement d'éviter la mobilisation de ressources en masse et en puissance des satellites utilisateurs mettant en œuvre un service aux utilisateurs.

Aussi, il est proposé, selon un aspect de l'invention, un système de communication à très haut débit par satellites comprenant :
- au moins une station optique d'alimentation configurée pour échanger des données numériques avec au moins un satellite d'alimentation par une liaison optique infrarouge à modulation numérique ;
- au moins un satellite utilisateur configuré pour échanger des signaux radiofréquences avec des terminaux d'utilisateur par une liaison radiofréquence ;
- au moins un satellite d'alimentation configuré pour:
   - échanger lesdits signaux radiofréquences avec au moins un satellite utilisateur par liaison optique à modulation analogique ; et
   - échanger des données numériques avec au moins une station terrienne optique d'alimentation par liaison optique infrarouge à modulation numérique;
et muni d'un ensemble de modulation/démodulation (Modem), configurés pour mettre en œuvre :
- la modulation des signaux radiofréquences par les données numériques reçus d'au moins une station optique d'alimentation par une liaison optique à modulation numérique, lesdits signaux radiofréquences étant destinés à au moins un satellite utilisateur, et
- la démodulation des signaux radiofréquences reçus d'au moins un satellite utilisateur en données numériques destinées à au moins une station terrienne optique d'alimentation par une liaison optique à modulation numérique;
et
- au moins un contrôleur central configuré pour mettre en œuvre un standard d'accès par contrôle d'au moins un ensemble de modulation/démodulation d'un satellite d'alimentation et relié à moins un point de présence de fournisseur d'accès internet; et
- au moins un réseau terrestre de diversité configuré pour échanger des données entre au moins une station terrienne optique et au moins un contrôleur central.

Un tel système permet d'utiliser la majorité des ressources en masse et en puissance du ou des satellites utilisateur pour les liaisons radiofréquences avec les terminaux d'utilisateur, ce qui permet d'augmenter la capacité en bande passante ou en débit de données du satellite utilisateur à très haut débit.

Un tel système permet d'utiliser la majorité des ressources en masse et en puissance du ou des satellites d'alimentation pour la modulation/démodulation et les traitements annexes des données numériques. Le satellite d'alimentation peut embarquer un serveur de proximité (proxy) et un serveur de cache.

Un tel système augmente la modularité du système à très haut débit par satellites et facilite l'évolutivité de la capacité du système. Ainsi, il est possible mettre en service progressivement des satellites d'alimentation de capacité moindre pour suivre l'évolution de la demande de trafic de données d'un satellite utilisateur de grande capacité. Il est également possible d'ajouter plusieurs satellites utilisateurs de moindre capacité à un satellite d'alimentation de grande capacité.

Selon un mode de réalisation, le système est configuré pour mettre en œuvre une pluralité de standards d'accès, un standard d'accès étant respectivement associé à au moins un satellite d'alimentation

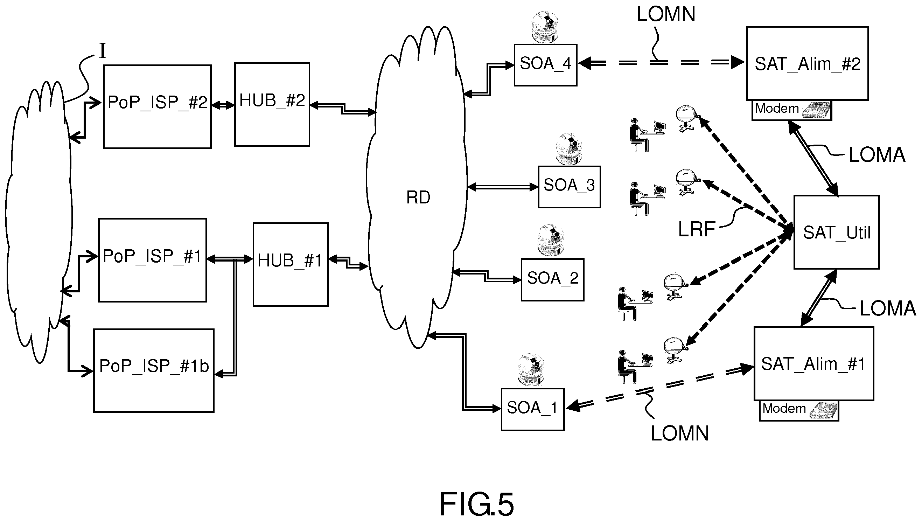

Ainsi, par exemple, un satellite utilisateur couvrant l'Europe peut fournir des services de données aux terminaux d'utilisateur selon deux systèmes d'accès différents suivant la position du terminal dans la couverture. Les terminaux d'utilisateur d'une première zone de la couverture peuvent échanger les données par exemple selon le système d'accès DVB-S2 /DVB-RCS2 de l'ETSI, les utilisateurs d'une deuxième zone peuvent échanger les données selon par exemple le système d'accès "DOCSIS over satellite" de l'ITU. Pour cela, le satellite utilisateur peut être alimenté à travers deux satellites d'alimentation: un premier satellite d'alimentation peut être équipé d'ensembles de modulation/démodulation opérant selon le standard d'accès DVB-S2/DVB-RCS2 et un deuxième satellite d'alimentation peut être équipé d'ensembles de modulation/démodulation opérant selon le standard d'accès DOCSIS. La figure 5 illustre ce mode de réalisation.

Selon un mode de réalisation, le système comprend une pluralité de réseaux de diversité, un réseau de diversité étant respectivement configuré pour échanger des données entre au moins un contrôleur central respectif et un premier ensemble respectif de stations terriennes optiques d'alimentation, ledit ensemble de stations optiques d'alimentation étant configuré pour échanger des données avec au moins un satellite d'alimentation.

Ainsi, par exemple, un premier réseau terrestre de diversité peut être configuré pour échanger des données entre au moins un premier contrôleur central et un premier ensemble de stations optiques d'alimentation. Cet ensemble de stations optiques d'alimentation est configuré pour échanger des données avec au moins un satellite d'alimentation. Un deuxième réseau terrestre de diversité peut être configuré pour échanger des données entre un deuxième contrôleur central et un deuxième ensemble de stations optiques d'alimentation. Ce deuxième ensemble de stations optiques d'alimentation peut être configuré pour échanger des données avec un deuxième satellite d'alimentation.

Par exemple, un sous-ensemble de station(s) optique(s) d'alimentation et le réseau de diversité correspondant sont disposés dans un même pays.

Ce mode de réalisation présente l'avantage de permettre à l'opérateur du satellite utilisateur de fournir de la capacité à plusieurs ISP opérant dans différent pays ou régions et utilisant différents systèmes d'accès par satellite. De plus, le réseau de diversité, ses stations d'alimentation et ses centres de contrôles associés, peuvent être localisés dans un pays ou une région et donc le réseau de diversité est fonctionnellement séparé des autres réseaux de diversité localisés dans d'autre pays ou régions. Ce système permet de cloisonner les données dans chaque pays ou région et donc permet de mieux répondre par exemple au règlement européen sur la protection des données (RGPD) ou aux autres cadres législatifs d'autres pays ou régions.

Dans un mode de réalisation, un satellite utilisateur comprend :
- au moins un terminal optique analogique et un ensemble de convertisseurs optiques/électriques et électriques/optiques, configuré pour échanger des signaux radiofréquences avec un satellite d'alimentation par des signaux infrarouges modulés par lesdits signaux radiofréquences, et
- un ensemble de transpondeurs et d'antennes configuré pour échanger des signaux radiofréquences avec des terminaux d'utilisateur.

Selon un mode de réalisation, un satellite d'alimentation comprend :
- au moins un terminal optique numérique et son ensemble de modulateurs/démodulateurs optiques numériques configurés pour échanger des données numériques avec une station optique d'alimentation par des signaux infrarouges modulés par lesdites données numériques,
- au moins un terminal optique analogique et un ensemble de convertisseurs optiques/électriques et électriques/optiques, configuré pour échanger des signaux radiofréquences avec un satellite utilisateur par des signaux infrarouges modulés par lesdits signaux radiofréquences,
- un ensemble de modulation/démodulation et d'appareils accessoires configuré pour mettre en œuvre :
   - la modulation des signaux radiofréquences par les données numériques issus de l'ensemble des modulateurs/ démodulateurs optiques numériques, et
   - la démodulation des signaux radiofréquences issus de l'ensemble des convertisseurs optiques/électriques.

L'invention sera mieux comprise à l'étude de quelques modes de réalisation décrits à titre d'exemples nullement limitatifs et illustrés par les dessins annexés sur lesquels :
- la figure 1 illustre schématiquement un système de communication par satellites à très haut débit comprenant un satellite mettant en œuvre un service aux utilisateurs alimenté par un réseau de stations radiofréquences d'alimentation de données, selon l'état de la technique ;
- la figure 2 illustre schématiquement, un système de communication par satellites à très haut débit comprenant un satellite utilisateurs mettant en œuvre le service aux utilisateurs, muni de modems embarqués, et alimenté par un réseau de stations optiques d'alimentation de données, selon l'état de la technique ;
- la figure 3 illustre schématiquement un système de communication par satellites à très haut débit comprenant un satellite utilisateurs et un satellite d'alimentation à traitement à bord, selon un aspect de l'invention ;
- la figure 4 illustre schématiquement un système de communication par satellites à très haut débit comprenant deux satellites utilisateurs et deux satellites d'alimentation, selon un autre aspect de l'invention ;
- la figure 5 illustre schématiquement un mode de réalisation d'un système comprenant un satellite utilisateur et deux satellites d'alimentation opérant selon deux standards d'accès différents, selon un aspect de l'invention ;
- la figure 6 illustre schématiquement un mode de réalisation d'un système comprenant un satellite utilisateur et deux satellites d'alimentation associés à deux réseaux de diversité cloisonnés, selon un aspect de l'invention ;
- la figure 7 illustre schématiquement un mode de réalisation d'un système comprenant un satellite d'alimentation et deux satellites utilisateurs, selon un aspect de l'invention ;
- la figure 8 illustre schématiquement la liaison de communication entre un terminal utilisateur et Internet, selon un aspect de l'invention ;
- la figure 9 illustre schématiquement la charge utile d'un satellite d'alimentation, selon un aspect de l'invention ; et
- la figure 10 illustre schématiquement la charge utile d'un satellite utilisateur, selon un aspect de l'invention.

Sur les différentes figures, les éléments ayant des références identiques sont similaires.

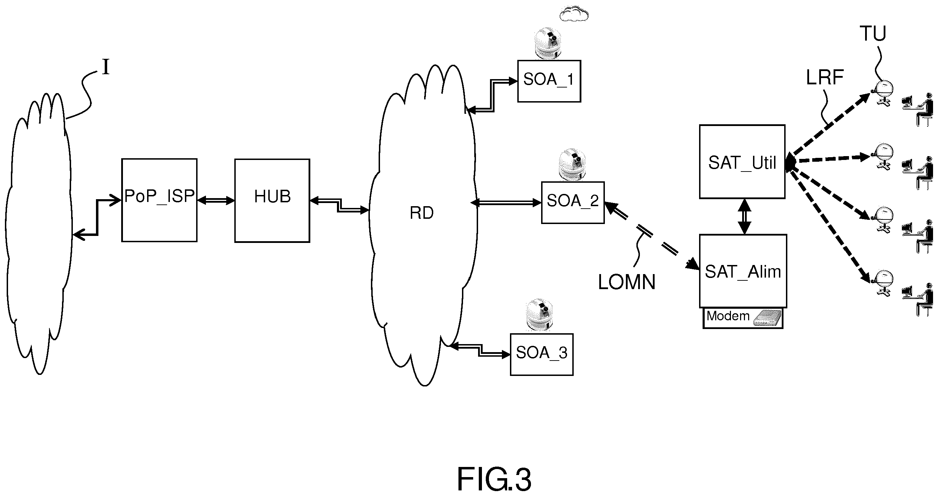

La figure 3 illustre schématiquement un système de communication par satellites à très haut débit comprenant un satellite utilisateurs SAT_Util et un satellite d'alimentation SAT_Alim, selon un aspect de l'invention.

Le système de communication par satellites à très haut débit comprend un satellite d'alimentation qui est un satellite séparé du satellite utilisateur du système à très haut débit, qui assure le traitement et le relai de la liaison d'alimentation ("feeder link" en langue anglaise). Le satellite d'alimentation assure la transmission entre les stations d'alimentation au sol et au moins un satellite à très haut débit, de l'ensemble des informations échangées avec des terminaux d'utilisateur, et le traitement de ces informations.

Une pluralité de stations terriennes optiques, en l'espèce trois stations, SOA_1, SOA_2, SOA_3, sont configurées pour échanger des données numériques DN avec un satellite d'alimentation SAT_Alim par une liaison optique LOMN à signaux infrarouges modulés par lesdites données numériques.

Au moins un satellite utilisateur, en l'espèce un satellite utilisateur SAT_Util, est configuré pour échanger des données numériques avec des terminaux d'utilisateur TU par une liaison à signaux radiofréquences LRF modulés par lesdites données numériques.

Au moins un satellite d'alimentation, en l'espèce un satellite d'alimentation SAT_Alim, est configuré pour échanger des signaux radiofréquences SR avec au moins un satellite utilisateur SAT_Util par liaison optique analogique LOMA à signaux infrarouges modulés par lesdits signaux radiofréquences, échanger des données numériques avec au moins une station terrienne optique, en l'espèce les trois stations SOA_1, SOA_2, SOA_3 par liaison optique LOMN à modulation numérique, et muni d'un ensemble de modulation/démodulation Modem, configurés pour mettre en œuvre :
- la modulation des signaux radiofréquences SR par les données numériques DN issues d'une des stations terriennes optiques SOA_1, SOA_2, SOA_3, lesdits signaux radiofréquences étant destinés au satellite utilisateur SAT_Util, et
- la démodulation des signaux radiofréquences SR issus du satellite utilisateur SAT_Util en données numériques destinées à au moins une des stations terriennes optiques SOA_1, SOA_2, SOA_3.

Au moins un réseau terrestre de diversité, en l'espèce un réseau terrestre de diversité RD, est configuré pour échanger des données entre au moins une des stations terriennes optiques SOA_1, SOA_2, SOA_3 et au moins un contrôleur central, en l'espèce un contrôleur central HUB configuré pour :
- contrôler au moins un ensemble de modulation/démodulation Modem du satellite d'alimentation SAT_Alim ; et
- interfacer avec le réseau de communication Internet par un point de présence de fournisseur d'accès internet PoP_ISP ; conformément à un standard d'accès.

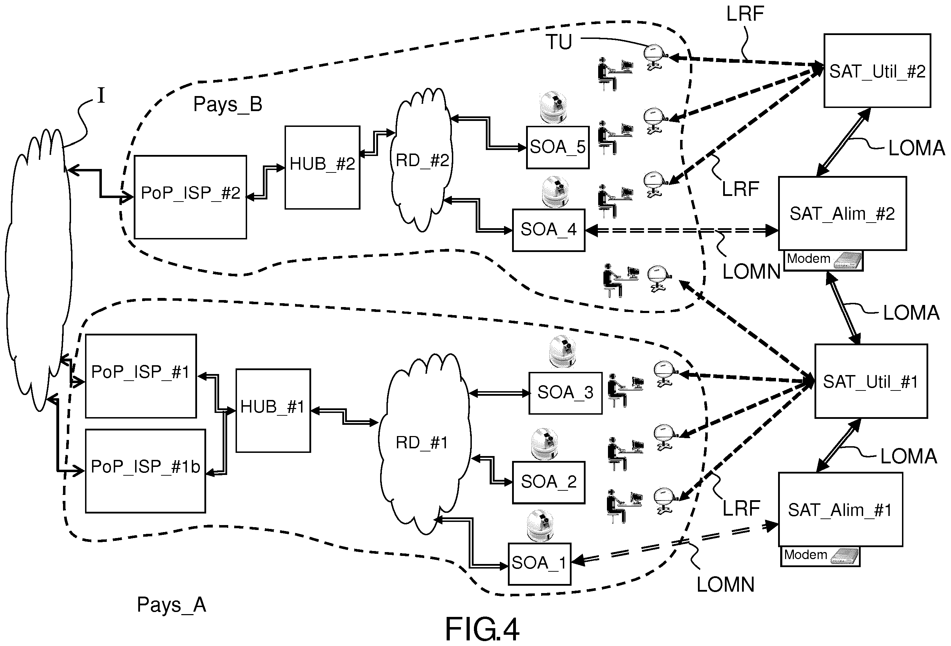

La figure 4 illustre schématiquement un système de communication par satellites à très haut débit selon un aspect de l'invention comprenant deux satellites utilisateurs SAT_Util_#1, SAT_Util_#2 et deux satellites d'alimentation SAT_Alim_#1, SAT_Alim_#2.

En effet, l'invention permet d'avoir des satellites utilisateurs identiques.

Le système comprend une pluralité de stations terriennes optiques, en l'espèce six stations, dont trois SOA_1, SOA_2, SOA_3 sont situées dans un pays Pays_A, et deux SOA_4, SOA_5 dans un pays Pays_B.

Les stations optiques sont configurées pour échanger des données numériques DN avec au moins un satellite d'alimentation par une liaison optique LOMN à signaux infrarouges modulés par lesdites données numériques.

En l'espèce, les stations optiques SOA_1, SOA_2, SOA_3 du pays Pays_A échangent des données numériques avec au moins un satellite d'alimentation dédié, en l'espèce un satellite d'alimentation dédié SAT_Alim_#1, et les stations optiques SOA_4, SOA_5 du pays Pays_B échangent des données numériques avec au moins un satellite d'alimentation dédié, en l'espèce un satellite d'alimentation SAT_Alim_#2.

Au moins un satellite utilisateur, en l'espèce deux satellites utilisateurs SAT_Util_#1, SAT_Util_#2, sont configurés pour échanger des données numériques DN avec des terminaux d'utilisateur TU par une liaison LRF à signaux radiofréquences, par exemple en bande Ka, modulés par lesdites données numériques.

Au moins un satellite d'alimentation, en l'espèce les deux satellites d'alimentation SAT_Alim_#1, SAT_Alim_#2, sont configurés pour échanger des signaux radiofréquences SR avec au moins un satellite utilisateur, en l'espèce les deux satellites utilisateurs SAT_Util_#1, SAT_Util_#2, par liaison optique LOMA analogique à signaux infrarouges modulés par lesdits signaux radiofréquences, et échanger des données numériques avec au moins une station terrienne optique, en l'espèce leurs stations dédiées, respectivement SOA_1, SOA_2, SOA_3 et SOA_4, SOA_5, par liaison optique LOMN à modulation numérique, et muni d'un ensemble de modulation/démodulation Modem, configurés pour mettre en œuvre :
- la modulation des signaux radiofréquences par les données numériques issus d'une des stations terriennes optiques dédiées, lesdits signaux radiofréquences étant destinés au satellite utilisateur SAT_Util_#1, SAT_Util_#2, et
- la démodulation des signaux radiofréquences issus du satellite utilisateur SAT_Util_#1, SAT_Util_#2 en données numériques destinées à au moins une des stations terriennes optiques dédiées.

Au moins un réseau terrestre de diversité, en l'espèce deux réseaux terrestres de diversité RD#_1, RD#_2 un pour les stations SOA_1, SOA_2 du pays Pays_A et un pour les stations SOA_3, SOA_4 du pays Pays_B, sont configurés pour échanger des données entre au moins une des stations terriennes optiques dédiées et au moins un contrôleur central, en l'espèce deux contrôleurs centraux dédiés HUB_#1, HUB_#2, configuré pour :
- contrôler au moins un ensemble de modulation/démodulation Modem du satellite d'alimentation dédié SAT_Alim_#1, SAT_Alim_#2 ; et
- interfacer avec le réseau de communication Internet I par au moins un point de présence de fournisseur d'accès internet dédié PoP_lSP_#1, PoP_lSP_#1b, PoP_lSP_#2.

La figure 5 illustre schématiquement un mode de réalisation détaillée d'un système comprenant un satellite utilisateurs et deux satellites d'alimentation opérant selon deux standards d'accès différents, selon un aspect de l'invention.

Le système comprend un satellite utilisateur SAT_Util offrant des services de données aux terminaux d'utilisateur TU selon deux systèmes d'accès différents. Les terminaux d'utilisateur abonné à un premier fournisseur d'accès Internet ISP_#1 échangent les données selon, par exemple, le standard d'accès DVB-S2 /DVB-RCS2 de l'ETSI. Les utilisateurs abonnés à un autre fournisseur d'accès Internet ISP_#2 échangent les données selon par exemple le standard d'accès "DOCSIS over satellite" de l'ITU. Pour cela, le satellite utilisateur SAT_Util est alimenté à travers deux satellites d'alimentation: un premier satellite d'alimentation SAT_Alim_#1 est équipé d'ensembles de modulation/démodulation Modem opérant selon le standard d'accès DVB-S2/DVB-RCS2 et un deuxième satellite d'alimentation SAT_Alim_#2 est équipé d'ensembles de modulation/démodulation opérant selon le standard d'accès DOCSIS.

Un réseau terrestre de diversité RD est configuré pour échanger des données entre les stations terriennes optiques d'alimentation SOA_1, SOA_2, SOA_3, SOA_4 et les contrôleurs centraux HUB_#1, HUB_#2. Le premier contrôleur central HUB_#1 contrôle les ensembles de modulation/démodulation Modem du premier satellite d'alimentation SAT_Alim_#1 selon un premier standard d'accès, par exemple DVB. Le deuxième contrôleur central HUB_#2 contrôle les ensembles de modulation/démodulation Modem du deuxième satellite d'alimentation SAT_Alim_#2 selon un deuxième standard d'accès, par exemple DOCSIS.

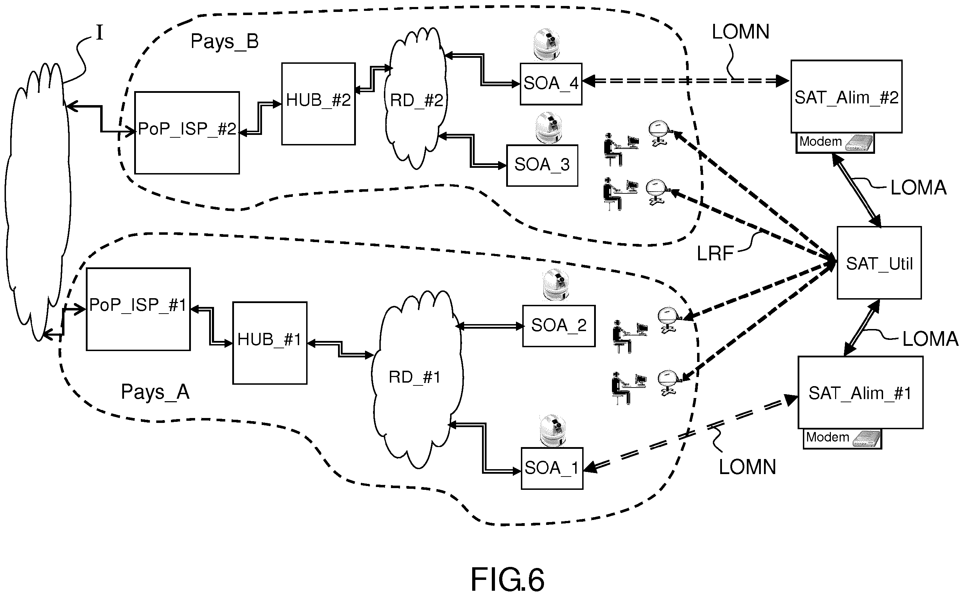

La figure 6 illustre schématiquement un mode de réalisation d'un système comprenant un satellite utilisateur et deux satellites d'alimentation associés à deux réseaux de diversité cloisonnés, selon un aspect de l'invention.

Le système comprend un satellite utilisateur SAT_Util offrant des services de données aux terminaux d'utilisateur TU localisés dans deux pays Pays_A, Pays_B. A ces fins, le satellite utilisateur SAT_Util est alimenté par deux satellites d'alimentation SAT_Alim_#1, SAT_Alim_#2. Un premier satellite d'alimentation SAT_Alim_#1 est alimenté en données par un ensemble de stations terriennes optiques d'alimentation SOA_1, SOA_2 localisées dans un premier pays Pays_A. Un deuxième satellite d'alimentation SAT_Alim_#2 est alimenté en données par un ensemble de stations terriennes optiques d'alimentation SOA_3, SOA_4 localisées dans un deuxième pays Pays_B.

Un premier réseau terrestre de diversité RD#_1 localisé dans le premier pays Pays_A est configuré pour échanger des données entre un premier contrôleur central HUB_#1 et un premier ensemble de stations terriennes optiques d'alimentation SOA_1, SOA_2. Le premier contrôleur central HUB_#1 interface avec le réseau de communication Internet I par un point de présence d'un fournisseur d'accès Internet PoP_lSP_#1 du premier pays Pays_A.

Un deuxième réseau terrestre de diversité RD_#2 est configuré pour échanger des données entre un deuxième contrôleur central HUB_#2 et un deuxième ensemble de stations terriennes optiques d'alimentation SOA_3, SOA_4. Le deuxième contrôleur central HUB_#2 interface avec le réseau de communication Internet I par un point de présence d'un fournisseur d'accès Internet PoP_lSP_#2 du deuxième pays Pays_B.

Ainsi, bien qu'utilisant le même satellite utilisateur SAT_Util, les deux systèmes d'accès Internet par satellite des deux pays Pays_A, Pays_B, sont physiquement et fonctionnellement disjoints: chaque pays a ses terminaux d'utilisateur, ses points de présence, ses contrôleurs centraux, son réseau de diversité, ses stations terriennes optiques d'alimentation et ses satellites d'alimentation. Par exemple, cette séparation physique peut faciliter la mise en application du règlement européen sur la protection des données RGPD dans les deux pays.

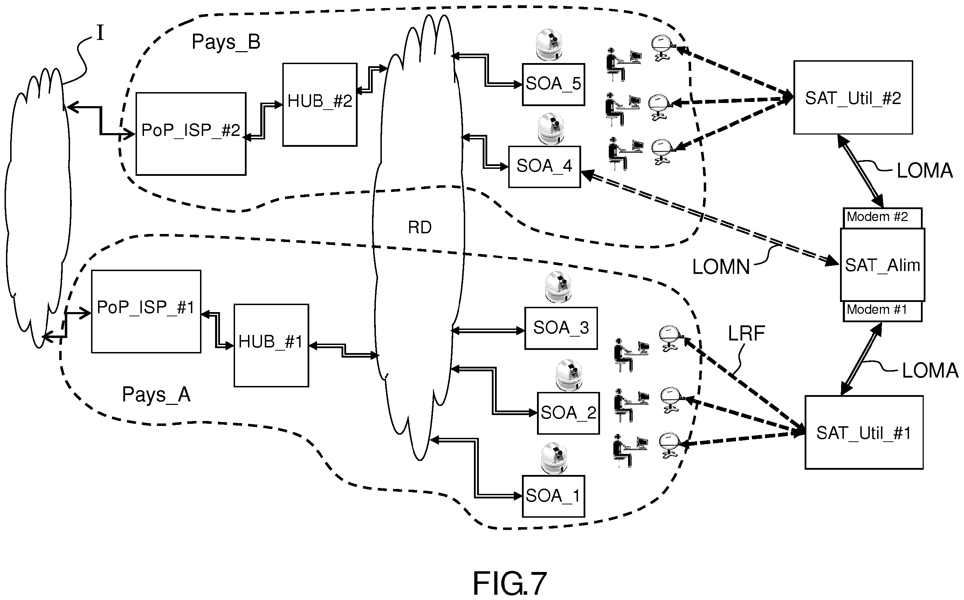

La figure 7 illustre schématiquement un mode de réalisation d'un système comprenant un satellite d'alimentation et deux satellites d'utilisateur, selon un aspect de l'invention.

Le système comprend deux satellites utilisateurs SAT_Util_#1, SAT_Util_#2 offrant des services de données aux terminaux d'utilisateur TU répartis par exemple dans deux pays ou régions Pays_A, Pays_B. Les terminaux d'utilisateur localisés dans le premier pays ou région Pays_A sont abonnés à un premier fournisseur d'accès Internet lSP_#1. Les utilisateurs localisés dans le deuxième pays Pays_B sont abonnés à un autre fournisseur d'accès Internet ISP_#2. Le système comprend aussi un satellite d'alimentation SAT_Alim qui alimente les deux satellites d'utilisateur SAT_Util_#1, SAT_Util_#2, par deux liaisons optiques intersatellites. Le satellite d'alimentation SAT_Alim échange des données avec une station terrienne optique d'alimentation SOA_1, SOA_2, SOA_3, SOA_4, SOA_5. Le satellite d'alimentation SAT_Alim comprend deux ensembles de modulation/démodulation Modem#1, Modem#2.

Un réseau terrestre de diversité RD est configuré pour échanger des données entre les stations terriennes optiques d'alimentation SOA_1, SOA_2, SOA_3, SOA_4, SOA_5 et les contrôleurs centraux HUB_#1, HUB_#2. Le contrôleur central HUB_#1 contrôle un premier ensemble de modulation/démodulation Modem#1 du satellite d'alimentation SAT_Alim. Le deuxième contrôleur central HUB_#2 contrôle le deuxième ensemble de modulation/démodulation Modem#2 du satellite d'alimentation SAT_Alim.

A noter que les standards d'accès utilisés par les deux fournisseurs d'accès Internet ISP#1, ISP#2 peuvent être différents, par exemple le premier fournisseur du premier pays ISP#1 peut utiliser le standard d'accès DVB-S2 /DVB-RCS2 de l'ETSI, le deuxième fournisseur du deuxième pays ISP#2 peut utiliser le standard d'accès DOCSIS de l'ITU. C'est en effet possible dans ce mode de réalisation, car les satellites utilisateur sont transparents, les ensembles de modulation/démodulation sont dans le satellite d'alimentation.

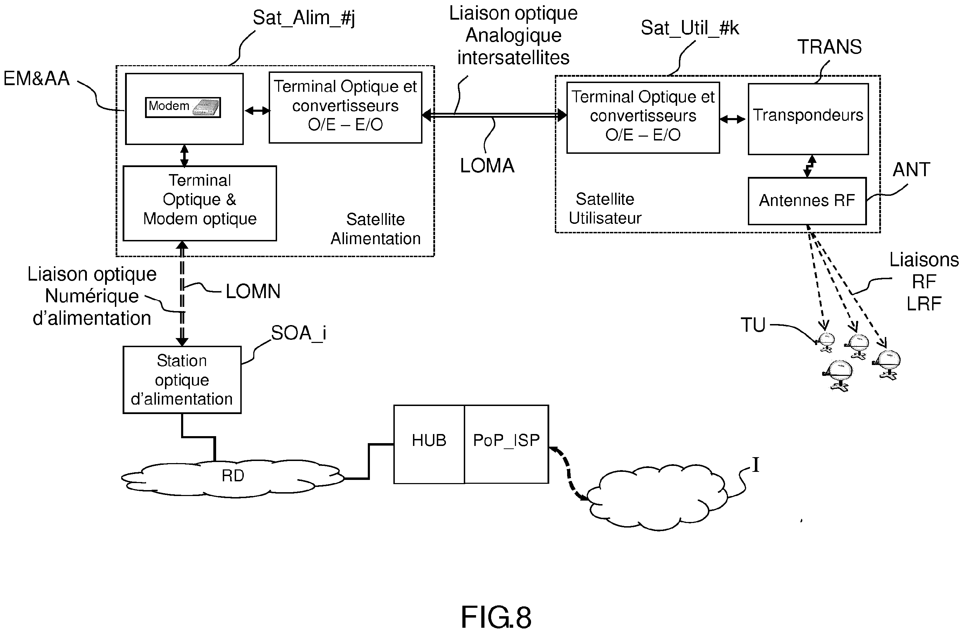

La figure 8 illustre schématiquement la liaison de communication entre un terminal utilisateur et Internet selon l'invention.

Dans le sens direct de la liaison de communication entre un terminal utilisateur et le point de présence du fournisseur d'accès Internet, c'est à dire dans le sens d'Internet vers l'utilisateur, les données traversent les équipements et utilisent les liaisons suivants : le point de présence PoP, le centre de contrôle HUB, le réseau de diversité RD, une station terrienne optique d'alimentation SOA_i, une liaison optique LOMN numérique d'alimentation, un satellite d'alimentation SAT_Alim_#j, une liaison optique LOMA analogique inter-satellites, un satellite utilisateur SAT_Util_#k, une liaison radiofréquence LRF et un terminal d'utilisateur TU.

Dans le sens retour de la liaison de communication entre un utilisateur et le point de présence, c'est à dire dans le sens de l'utilisateur vers Internet, les données traversent les équipements et utilisent les liaisons suivantes: le terminal d'utilisateur TU, une liaison radiofréquence LRF, un satellite utilisateur SAT_Util_#k, une liaison optique LOMA analogique intersatellite, un satellite d'alimentation SAT_Alim_#j, une liaison optique LOMN numérique d'alimentation, une station terrienne optique d'alimentation SOA_#i, le centre de contrôle HUB et le point de présence PoP.

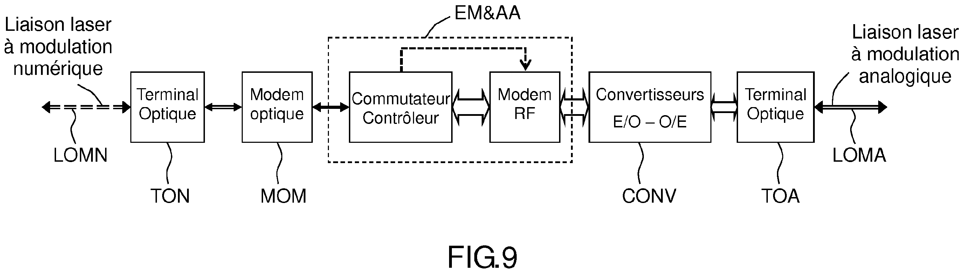

La figure 9 illustre schématiquement la charge utile d'un satellite d'alimentation, selon un aspect de l'invention.

La charge utile d'un satellite d'alimentation comprend un terminal optique numérique TON, un ensemble de modulateurs/démodulateurs optiques numériques MON, un ensemble EM&AA de modulation/ démodulation et un terminal optique analogique TOA et un ensemble de convertisseurs CONV optiques/électriques et électriques/optiques. L'ensemble EM&AA de modulation/démodulation comprend des modulateurs/démodulateurs Modem RF et des appareils accessoires Commutateur/Contrôleur.

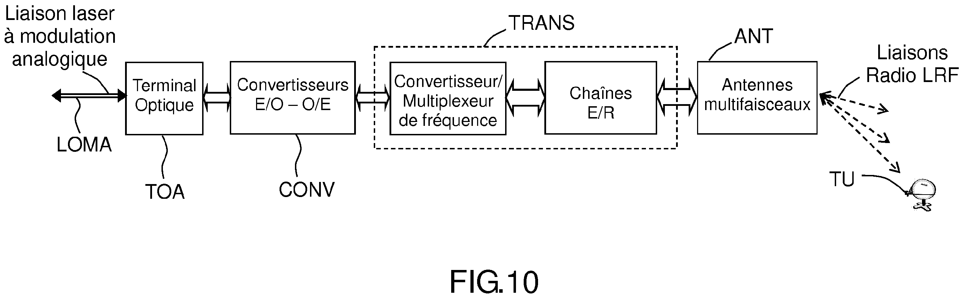

La figure 10 illustre schématiquement la charge utile d'un satellite utilisateur, selon un aspect de l'invention.

La charge utile d'un satellite utilisateur comprend un terminal optique analogique TOA, un ensemble de convertisseurs CONV optiques/ électriques et électriques/optiques et un ensemble TRANS de transpondeurs et des antennes ANT. Les antennes ANT émettent et reçoivent les signaux radiofréquences destinés et issus de terminaux d'utilisateur TU.

## Revendications

1. Système de communication à très haut débit par satellites comprenant :
- au moins une station optique d'alimentation (SOA_i) configurée pour échanger des données numériques avec au moins un satellite d'alimentation (SAT_Alim_#i) par une liaison optique infrarouge à modulation numérique (LOMN) ;
- au moins un satellite utilisateur (SAT_Util) configuré pour échanger des signaux radiofréquences (SR) avec des terminaux d'utilisateur (TU) par une liaison radiofréquence (LRF) ;
- au moins un satellite d'alimentation (SAT_Alim_#i) configuré pour:
- échanger lesdits signaux radiofréquences (SR) avec au moins un satellite utilisateur (SAT_Util, SAT_Util_#j) par liaison optique à modulation analogique (LOMA) ; et
- échanger des données numériques avec au moins une station terrienne optique d'alimentation (SOA_i) par liaison optique infrarouge à modulation numérique,
et muni d'un ensemble de modulation/démodulation (Modem), configurés pour mettre en œuvre :
- la modulation des signaux radiofréquences (SR) par les données numériques reçus d'au moins une station optique d'alimentation (SOA_i) par une liaison optique à modulation numérique (LOMN), lesdits signaux radiofréquences (SR) étant destinés à au moins un satellite utilisateur (SAT_Util, SAT_Util_#i), et
- la démodulation des signaux radiofréquences (SR) reçus d'au moins un satellite utilisateur (SAT_Util, SAT_Util_#i) en données numériques destinées à au moins une station terrienne optique d'alimentation (SOA_i) par une liaison optique à modulation numérique (LOMN) ;
et
- au moins un contrôleur central (HUB_#i) configuré pour mettre en œuvre un standard d'accès par contrôle d'au moins un ensemble de modulation/démodulation (Modem) d'un satellite d'alimentation (SAT_Alim_#i) et relié à moins un point de présence de fournisseur d'accès internet (PoP_lSP_#i) ; et
- au moins un réseau terrestre de diversité (RD) configuré pour échanger des données entre au moins une station terrienne optique (SOA_i) et au moins un contrôleur central (HUB_#i).

2. Système selon la revendication 1, configuré pour mettre en œuvre une pluralité de standards d'accès, un standard d'accès étant respectivement associé à au moins un satellite d'alimentation (SAT_Alim_#i).

3. Système selon la revendication 2, comprenant une pluralité de réseaux de diversité (RD_#i), un réseau de diversité (RD_#i) étant respectivement configuré pour échanger des données entre au moins un contrôleur central (HUB_#i) respectif et un premier ensemble respectif de stations terriennes optiques d'alimentation, ledit ensemble de stations optiques d'alimentation étant configuré pour échanger des données avec au moins un satellite d'alimentation (SAT_Alim_#i).

4. Système selon la revendication 3, dans lequel un sous-ensemble de station(s) optique(s) d'alimentation (SOA_i) et le réseau de diversité (RD_#i) correspondant sont disposés dans un même pays.

5. Système selon l'une des revendications précédentes, dans lequel un satellite utilisateur (SAT_Util_#i) comprend :
- au moins un terminal optique analogique (TOA) et un ensemble de convertisseurs (CONV) optiques/électriques et électriques/optiques, configuré pour échanger des signaux radiofréquences avec un satellite d'alimentation (SAT_Alim_#i) par des signaux infrarouges modulés par lesdits signaux radiofréquences, et
- un ensemble de transpondeurs (TRANS) et d'antennes (ANT) configuré pour échanger des signaux radiofréquences avec des terminaux d'utilisateur (TU).

6. Système selon l'une des revendications précédentes, dans lequel un satellite d'alimentation (SAT_Alim_#i) comprend :
- au moins un terminal optique numérique (TON) et son ensemble de modulateurs/démodulateurs optiques numériques (MON) configurés pour échanger des données numériques avec une station optique d'alimentation (SOA) par des signaux infrarouges modulés par lesdites données numériques,
- au moins un terminal optique analogique (TOA) et un ensemble de convertisseurs (CONV) optiques/électriques et électriques/optiques, configuré pour échanger des signaux radiofréquences avec un satellite utilisateur (SAT_Util) par des signaux infrarouges modulés par lesdits signaux radiofréquences,
- un ensemble (EM&AA) de modulation/démodulation et d'appareils accessoires configuré pour mettre en œuvre :
• la modulation des signaux radiofréquences par les données numériques issus de l'ensemble (MON) des modulateurs/ démodulateurs optiques numériques, et
• la démodulation des signaux radiofréquences issus de l'ensemble des convertisseurs (CONV) optiques/électriques.

## Patentansprüche

1. Satellitenkommunikationssystem mit sehr hoher Bandbreite, das Folgendes umfasst:
- mindestens eine optische Versorgungsstation (SOA_i), konfiguriert zum Austauschen digitaler Daten mit mindestens einem Versorgungssatelliten (SAT_Alim_#i) über eine optische Infrarotverbindung mit digitaler Modulation (LOMN);
- mindestens einen Benutzersatelliten (SAT_Util), konfiguriert zum Austauschen von Funkfrequenzsignalen (SR) mit Benutzerendgeräten (TU) über eine Funkfrequenzverbindung (LRF);
- mindestens einen Versorgungssatelliten (SAT Alim_#i), konfiguriert zum:
- Austauschen der Funkfrequenzsignale (SR) mit mindestens einem Benutzersatelliten (SAT_Util, SAT Util_#j) über eine optische Verbindung mit analoger Modulation (LOMA); und
- Austauschen digitaler Daten mit mindestens einer optischen Versorgungsbodenstation (SOA_i) über eine optische Infrarotverbindung mit digitaler Modulation,
und ausgestattet mit einer Modulations-/Demodulationseinheit (Modem), konfiguriert zum Implementieren:
- der Modulation der Funkfrequenzsignale (SR) durch die von mindestens einer optischen Versorgungsstation (SOA_i) über eine optische Verbindung mit digitaler Modulation (LOMN) empfangenen digitalen Daten, wobei die Funkfrequenzsignale (SR) für mindestens einen Benutzersatelliten (SAT Util, SAT Util_#i) bestimmt sind, und
- der Demodulation der von mindestens einem Benutzersatelliten (SAT_Util, SAT_Util_#i) empfangenen Funkfrequenzsignale (SR) in digitale Daten, die für mindestens eine optische Versorgungsbodenstation (SOA_i) über eine optische Verbindung mit digitaler Modulation (LOMN) bestimmt sind;
und
- mindestens eine Zentralsteuerung (HUB_#i), konfiguriert zum Implementieren eines Zugangsstandards durch Steuern von mindestens einer Modulations-/Demodulationseinheit (Modem) eines Versorgungssatelliten (SAT_Alim_#i) und verbunden mit mindestens einem Internetdienstanbieter-Präsenzpunkt (PoP_lSP_#i); und
- mindestens ein terrestrisches Diversity-Netzwerk (DR), konfiguriert zum Austauschen von Daten zwischen mindestens einer optischen Bodenstation (SOA_i) und mindestens einer Zentralsteuerung (HUB_#i).

2. System nach Anspruch 1, konfiguriert zum Implementieren einer Vielzahl von Zugangsstandards, wobei ein Zugangsstandard jeweils mit mindestens einem Versorgungssatelliten (SAT_Alim#i) assoziiert ist.

3. System nach Anspruch 2, das eine Vielzahl von Diversity-Netzwerken (RD #i) umfasst, wobei ein Diversity-Netzwerk (RD_#i) jeweils zum Austauschen von Daten zwischen mindestens einer jeweiligen Zentralsteuerung (HUB #i) und einem jeweiligen ersten Satz von optischen Versorgungsbodenstationen konfiguriert ist, wobei der Satz von optischen Versorgungsstationen zum Austauschen von Daten mit mindestens einem Versorgungssatelliten (SAT_Alim_#i) konfiguriert ist.

4. System nach Anspruch 3, wobei sich eine Teilmenge von optischer/-n Versorgungsstation(en) (SOA i) und das entsprechende Diversity-Netzwerk (RD_#i) in demselben Land befinden.

5. System nach einem der vorherigen Ansprüche, wobei ein Benutzersatellit (SAT_Util_#i) Folgendes umfasst:
- mindestens ein analoges optisches Endgerät (TOA) und einen Satz von optischelektrischen und elektrisch-optischen Wandlern (CONV), konfiguriert zum Austauschen von Funkfrequenzsignalen mit einem Versorgungssatelliten (SAT_Alim_#i) durch von den Funkfrequenzsignalen modulierte Infrarotsignale, und
- einen Satz von Transpondern (TRANS) und Antennen (ANT), konfiguriert zum Austauschen von Funkfrequenzsignalen mit Benutzerendgeräten (TU).

6. System nach einem der vorherigen Ansprüche, wobei ein Versorgungssatellit (SAT_Alim_#i) Folgendes umfasst:
- mindestens ein digitales optisches Endgerät (TON) und seinen Satz von digitalen optischen Modulatoren/Demodulatoren (MON), konfiguriert zum Austauschen digitaler Daten mit einer optischen Versorgungsstation (SOA) durch Infrarotsignale, die durch die digitalen Daten moduliert sind,
- mindestens ein analoges optisches Endgerät (TOA) und einen Satz von optischelektrischen und elektrisch-optischen Wandlern (CONV), konfiguriert zum Austauschen von Funkfrequenzsignalen mit einem Benutzersatelliten (SAT_Util) durch Infrarotsignale, die durch die Funkfrequenzsignale moduliert werden,
- eine Modulations-/Demodulationseinheit (EM&AA) und Zusatzgeräte, konfiguriert zum Implementieren:
• der Modulation von Funkfrequenzsignalen durch die digitalen Daten von dem Satz (MON) von digitalen optischen Modulatoren/Demodulatoren, und
• der Demodulation von Funkfrequenzsignalen von dem Satz von optischelektrischen Wandlern (CONV).

## Claims

1. System for very high throughput satellite communication comprising:
- at least one optical feeder station (SOA_i) configured to exchange digital data with at least one feeder satellite (SAT_Alim_#i) via an infrared optical link with digital modulation (LOMN);
- at least one user satellite (SAT_Util) configured to exchange radiofrequency signals (SR) with user terminals (TU) via a radiofrequency link (LRF);
- at least one feeder satellite (SAT_Alim_#i) configured to:
- exchange the radiofrequency signals (SR) with at least one user satellite (SAT_Util, SAT_Util_#j) via an optical link with analogue modulation (LOMA); and
- exchange digital data with at least one terrestrial optical feeder station (SOA_i) via an infrared optical link with digital modulation,
and which is provided with a modulation/demodulation assembly (Modem), configured to carry out:
- the modulation of the radiofrequency signals (SR) via the digital data received from at least one optical feeder station (SOA_i) via an optical link with digital modulation (LOMN), the radiofrequency signals (SR) being intended for at least one user satellite (SAT_Util, SAT_Util_#i), and
- the demodulation of the radiofrequency signals (SR) received from at least one user satellite (SAT_Util, SAT_Util_#i) into digital data intended for at least one terrestrial optical feeder station (SOA_i) via an optical link with digital modulation (LOMN);
and
- at least one central controller (HUB_#i) configured to implement an access standard by controlling at least one modulation/demodulation assembly (Modem) of a feeder satellite (SAT_Alim_#i) and connected to at least one point of presence of an internet access provider (PoP_ISP_#i); and
- at least one terrestrial diversity network (RD) configured to exchange data between at least one terrestrial optical station (SOA_i) and at least one central controller (HUB_#i).

2. System according to claim 1, configured to implement a plurality of access standards, an access standard being associated with at least one feeder satellite (SAT_Alim_#i), respectively.

3. System according to claim 2, comprising a plurality of diversity networks (RD_#i), a diversity network (RD_#i) being configured to exchange data between at least one respective central controller (HUB_#i) and a respective first group of terrestrial optical feeder stations, respectively, the group of optical feeder stations being configured to exchange data with at least one feeder satellite (SAT_Alim_#i).

4. System according to claim 3, wherein a sub-assembly of optical feeder station(s) (SOA_i) and the corresponding diversity network (RD_#i) are arranged in the same country.

5. System according to any one of the preceding claims, wherein a user satellite (SAT_Util_#i) comprises:
- at least one analogue optical terminal (TOA) and a group of optical/electrical and electrical/optical converters (CONV) configured to exchange radiofrequency signals with a feeder satellite (SAT_Alim_#i) via infrared signals modulated by the radiofrequency signals, and
- a group of transponders (TRANS) and antennae (ANT) configured to exchange radiofrequency signals with user terminals (TU).

6. System according to any one of the preceding claims, wherein a feeder satellite (SAT_Alim_#i) comprises:
- at least one digital optical terminal (TON) and the group of digital optical modulators/demodulators (MON) thereof configured to exchange digital data with an optical feeder station (SOA) via infrared signals which are modulated by the digital data,
- at least one analogue optical terminal (TOA) and a group of optical/electrical and electrical/optical converters (CONV) configured to exchange radiofrequency signals with a user satellite (SAT_Util) via infrared signals which are modulated by the radiofrequency signals,
- a modulation/demodulation and accessory device assembly (EM&AA) configured to carry out:
• the modulation of the radiofrequency signals via the digital data originating from the group (MON) of digital optical modulators/demodulators, and
• the demodulation of the radiofrequency signals originating from the group of optical/electrical converters (CONV).
